# EUROPEAN PATENT SPECIFICATION

(11) **EP 3 640 013 B1**
(45) Date of publication and mention of the grant of the patent: **25.08.2021**
(21) Application number: 19461541.5
(22) Date of filing: 17.05.2019
(51) Int. Cl.: B29C 71/00, B29C 71/02, B29C 64/30, B33Y 40/00, B29C 64/40, B29K 71/00, B29C 64/118, B29C 64/295, B33Y 70/00, B33Y 80/00

(54) **METHOD FOR MANUFACTURING SPATIAL OBJECTS**
VERFAHREN ZUR HERSTELLUNG EINES RÄUMLICHEN OBJEKTS
PROCÉDÉ DE FABRICATION D'OBJETS SPATIAUX

(30) Priority: 16.10.2018 PL 42743118; 21.03.2019 US 201916360369
(43) Date of publication of application: 22.04.2020
(73) Proprietor: 3DGENCE SPOLKA Z OGRANICZONA ODPOWIEDZIALNOSCIA, 40-085 Katowice (PL)
(72) Inventor: Wilk, Krzysztof, 41-400 Myslowice (PL); Turzynski, Filip, 81-741 Sopot (PL); Roguski, Krzysztof, 03-741 Warszawa (PL); Nowoczek, Kamil, 43-424 Drogomysl (PL); Kostrzewa, Szymon, 05-622 Belsk Duzy (PL); Malcher, Radoslaw, 43-227 Góra (PL)
(74) Representative: AOMB Polska Sp. z.o.o.

(56) References cited:
- US-A1- 2015 145 168
- US-A1- 2015 259 530
- US-A1- 2018 001 520

## Description

### FIELD OF THE INVENTION

The field of present invention relates to a method for manufacturing spatial objects. More particularly, the field of the present invention relates to a method for manufacturing spatial objects, using three-dimensional printing devices and plastic materials that comprise (or consist essentially of) polyaryletherketones.

### BACKGROUND OF THE INVENTION

Polyaryletherketones - also commonly referred to as PAEK - is a family of thermoplastics. Polyaryletherketones are known to exhibit high-temperature stability and high mechanical strength, making such materials ideal for three-dimensional (3D) printing applications. Polyaryletherketones include a molecular backbone that contains alternating ketone (R-CO-R) and ether groups (R-O-R), with the linking R group between those functional groups consisting of a 1,4-substituted aryl group.

Polyaryletherketones are known to predominantly exist in one of two form phases, namely, an amorphous phase and a semi-crystalline phase, with each form phase differing in physicochemical properties (including differences in flexibility, hardness, and thermal resistance). In the context of plastic object manufacturing using these materials, it has been found that transition between a first phase (e.g., the amorphous phase) to a second phase (e.g., a semi-crystalline phase) - - or *vice versa* - - is often associated with changes in the state of internal stresses of the manufactured object. When such objects are manufactured using three-dimensional (3D) printers, the deposition of melted polyaryletherketone material requires strictly defined printing conditions (in one of the two phases), taking into account the desired physicochemical and heat resistance properties. It is undesirable to manufacture (print) an object partly in both phases due to the lowering of the object's strength.

Methods currently exist for 3D printing an object using polyaryletherketones, in which the object is produced in the semi-crystalline phase. In such methods, the working chamber of the 3D printer is heated to a temperature higher than the phase transition temperature, usually over 160°C. Such methods require 3D printers having more complicated constructions (and, therefore, such printers are considerably more expensive than typical 3D printers commonly found in the marketplace). In addition, such existing methods require high energy input; and support structures are more difficult to produce from dedicated materials (which complicates the final processing of the manufactured object).

Similarly, methods currently exist for 3D printing an object using polyaryletherketones, in which the object is produced in the amorphous phase. In short, after the object is initially printed, the object is heated ie. in an oven, which causes the object to undergo a phase transformation from the amorphous phase to the semi-crystalline phase (the desired end result for most manufacturing purposes). However, there are many disadvantages with such methods, including the occurrence of stresses within the material that comprises the object, which often leads to unwanted deformation of the object (and such deformation becomes more pronounced, as the geometric complexity of the object increases).

In view of the foregoing, it would be desirable to provide improved method for manufacturing (3D printing) spatial objects using polyaryletherketones in a semi-crystalline form phase, while substantially limiting the risk of subsequent object deformation.

Document US 2015/259530 A1 discloses a method for producing spatial objects according to the preamble of claim 1.

### SUMMARY OF THE INVENTION

According to certain aspects of the present invention, a method for producing spatial objects is provided. In certain preferred embodiments, the method begins by printing a spatial object using a three-dimensional (3D) printer and a printing material that comprises polyaryletherketones. The invention provides that the spatial object is printed in an amorphous phase. Next, the spatial object is placed into a container and submerged within a charging material. The invention provides that the charging material preferably exhibits high heat resistance properties and is chemically inert. More particularly, the invention provides that the charging material will exhibit heat resistant properties that inhibit degradation of the charging material between a glass transition temperature of the printing material (e.g., the applicable polyaryletherketones) and a melting temperature of the same printing material. Still further, the invention provides that the charging material will preferably be comprised of a granular material, which includes granules having a diameter (if spherical) or a widest cross-section (if irregular in form) between 0.05 mm and 3 mm. After the spatial object has been submerged in the container and charging material, vibrations are preferably applied to the container (to compact the charging material). Next, the invention provides that the spatial object - while submerged in the charging material within the container - is heated to a temperature (and for a period of time) that is sufficient to cause the spatial object to transition into a semi-crystalline phase (from its original amorphous phase). Finally, after the heating step above, the spatial object may then be removed from the container and charging material.

The invention is defined in claim 1.

According to certain preferred aspects of the present invention, polyetheretherketones and polyetherketoneketones are the preferred printing materials used in the methods described herein. Still further, according to certain preferred aspects of the present invention, the charging material will preferably include less than 50% impurities, and still more preferably, will include less than 10% impurities and less than 10% water. Non-limiting examples of suitable charging materials include sand, quartz granules, silica granules, silicon dioxide granules, aluminum dioxide granules, steel balls, or various combinations of the foregoing. The invention provides that, even more preferably, the charging material will consist essentially of silicon dioxide granules or aluminum dioxide granules.

According to yet further aspects of the invention, the methods described herein may further include printing one or more structural supports in the amorphous phase, along with the spatial object. In such embodiments, the invention provides that the structural supports are preferably configured to (a) physically support the spatial object during printing and (b) be removed from the spatial object after the spatial object has been completely printed.

The above-mentioned and additional features of the present invention are further illustrated in the Detailed Description contained herein.

### BRIEF DESCRIPTION OF DRAWINGS

Fig. 1 is a diagram of a 3D printed object positioned within the manufacturing chamber of a 3D printer.
Fig. 2 is a diagram that shows the object featured in Figure 1, after it has been removed from the 3D printer (and after its supports have been removed).
Fig. 3 is a diagram that shows the object featured in Figure 2, after it has been submerged in a charging material (within a container).
Fig. 4 is a diagram that shows the object featured in Figure 3, which is subjected to the heating step described herein.
Fig. 5 is a diagram that shows the object featured in Figure 4, after the object has been removed from the charging material.
Fig. 6 is a flow diagram that summarizes the general steps of the methods described herein

### DETAILED DESCRIPTION OF THE PREFERRED EMBODIMENTS OF THE INVENTION

The following will describe, in detail, several preferred embodiments of the present invention. These embodiments are provided by way of explanation only, and thus, should not unduly restrict the scope of the invention. In fact, those of ordinary skill in the art will appreciate upon reading the present specification and viewing the present drawings that the invention teaches many variations and modifications, and that numerous variations of the invention may be employed, used, and made without departing from the scope of the invention.

As explained above, polyaryletherketones - also commonly referred to as PAEK - is a family of thermoplastics that can be used as printing materials for three-dimensional (3D) printing applications. Polyaryletherketones are known to exhibit high-temperature stability and high mechanical strength, making polyaryletherketones a favorable material for 3D printing applications. Polyaryletherketones include a molecular backbone that contains alternating ketone (R-CO-R) and ether groups (R-O-R), with the linking R group between those functional groups consisting of a 1,4-substituted aryl group.

Polyetheretherketones - also commonly referred to as PEEK - is an organic thermoplastic polymer that is a member of the PAEK family of thermoplastics, which exhibits the chemical structure shown below.

Polyetherketoneketones - also commonly referred to as PEKK - is another organic thermoplastic polymer that is also a member of the PAEK family of thermoplastics, which exhibits the chemical structure shown below.

A method for manufacturing spatial objects described herein and, more particularly, a method for manufacturing spatial objects using three-dimensional (3D) printing devices may utilize the PAEK family of thermoplastics as printing materials, with PEEK and PEKK representing preferred printing materials. As used herein, "printing material(s)," "substrate material(s)," and similar phrases refer to substances that comprise or consist essentially of PAEK, including without limitation PEEK and/or PEKK, which are suitable for use in 3D printing applications.

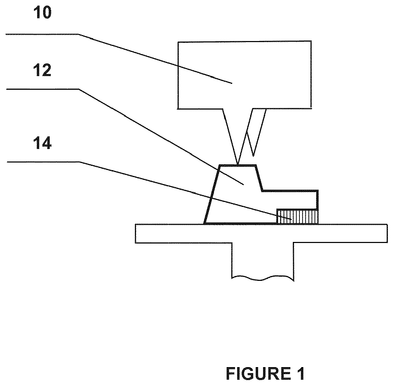

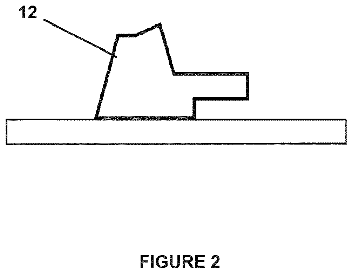

Referring now to Figures 1 - 6, according to certain preferred embodiments of the present invention, a spatial object **12** of interest may be printed / manufactured according to known procedures using commercially-available 3D printers, with the printing material substantially (or exclusively) consisting of polyaryletherketones (Fig. 1), including without limitation polyetheretherketones (PEEK) or polyetherketoneketones (PEKK). The invention provides that commercially-available 3D printers may be used to perform the method of the present invention, including typical 3D printers currently offered by 3DGence America, Inc. (Texas, United States) and its international affiliates. In certain preferred embodiments, two independent heads **10** on the 3D printer are employed to produce / print the object **12**. In such embodiments, a first of the two independent heads **10** of the 3D printer produces / prints the object **12**, while a second of the two independent heads **10** of the 3D printer produces one or more structural supports **14** for the object **12**. The invention provides that the one or more structural supports **14** are configured to structurally support areas of the object **12** during the printing process (which may otherwise experience mechanical failure without the aid of such supports **14**). The invention provides that the object **12** will be printed in the amorphous phase (i.e., a phase that lacks a crystalline structure or is otherwise less than 2% crystalline, which is often characterized or described as exhibiting a flexible, impact resistant and transparent state). After the object **12** has been printed, the underlying structural supports **14** may then be removed from the object **12** (Fig. 2).

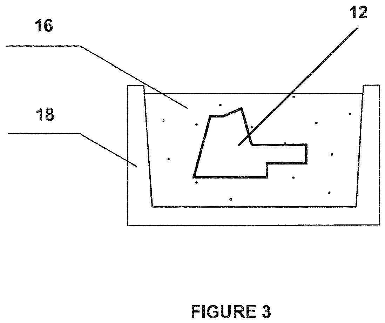

Next, the invention provides that the object **12** is backfilled with a charging material **16** (Fig. 3). More particularly, the invention provides that the object **12** is preferably deposited into a container **18** and submerged within a desired charging material **16** - preferably under typical temperature conditions, such as between 140°C and 320°C or, more preferably, between 190°C and 210°C. The object **12** should be submerged within the charging material **16** for at least 6h and for no more than 14h. As used herein, "charging material" refers to a substance that exhibits high heat resistance, no disintegration and good flow properties. More particularly, a suitable charging material **16**, as used in the invention described herein, will comprise or consist essentially of a substance that exhibits (1) high heat resistance (the substance should resist breakdown or degradation between a temperature Tg (glass transition temperature) of the printed material / substrate and the melting temperature of the printed material / substrate (e.g., it should resist breakdown or degradation between 143°C and 360°C); (2) a bulk density of at least 64% volume taken up by charging material and no more than 98% (3) a size or fraction of at least 0.05 mm and no more than 3 mm in diameter (if spherical) or by widest cross-section (if irregular in form), with a preferred size of 0.8 mm to 1.2 mm (in certain preferred embodiments, the charging material **16** consists of a plurality of loose spheres or granules that fall within such size parameters); (4) an impurity level of no more than 50% (but more preferably no more than 10%); and (5) a moisture (water) content of no more than 10%. The invention provides that preferred (but non- limiting) examples of such charging materials **16** include sand, quartz granules, silica granules, silicon dioxide granules, aluminum dioxide granules, metal balls, especially steel balls, or various combinations of the foregoing, such as combinations of silicon dioxide and aluminum dioxide granules. However, the invention provides that particularly preferred charging materials consist essentially of aluminum dioxide granules or silicon dioxide granules.

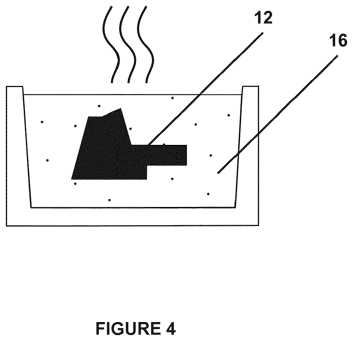

After the object **12** is deposited into a container **18** and submerged within a desired charging material **16**, the charging material **16** is then compacted. More particularly, the object **12** - when submerged within the charging material **16** - is subject to moderate vibrations for several minutes. Such vibrations may be applied by tapping on the side of the container **18** that includes the object **12** and charging material **16**. Alternatively, the container **18** may be subjected to vibrations through controlled sonication or other mechanical procedures. Following this compaction step, the container **18**, together with the object **12** submerged in the charging material **16**, is heated in an oven at a temperature that is no higher than the melting point of the printing material that comprises the object **12**, but above the phase transition temperature of such printing material that comprises the object **12** (Figure 4). Table-1 (below) provides exemplary minimum and maximum temperatures for this heating step, for printing materials that are substantially comprised of PEEK or PEKK.

| | MIN Temp. | MAX Temp. |
|---|---|---|
| PEEK | 143°C ±10% | 343°C ±10% |
| PEKK | 163°C ±10% | 360°C ±10% |

This heating step should be performed for a period of time that is sufficient to transition the object **12** from an amorphous phase into a semi-crystalline phase. Depending on the size and dimensions of the object **12**, the required period of time for this heating step will typically range between 6h and 14h. Preferably, once the object **12** is converted into a semi-crystalline phase, the object **12** is substantially crystalline in form, with the material that comprises the object **12** being no more than 80% in the amorphous phase and, preferably, no more than 65% in the amorphous phase.

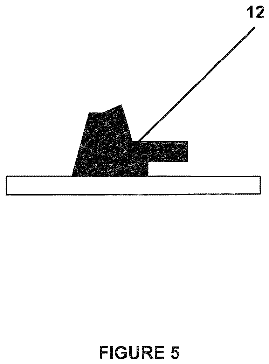

According to the method, the invention provides that the phase transformation of the printing material that comprises the 3D-printed object **12** to the semi-crystalline phase is facilitated by the heating step described above. Furthermore, because the heating temperature is controlled, a preferably even distribution of stresses results, while the charging material **16** ensures mechanical maintenance of the geometric form of the object **12** and further inhibits the deformation of the object **12** during the phase transformation. After this heating procedure, the object **12** can be removed from the charging material **16** (Fig. 5).

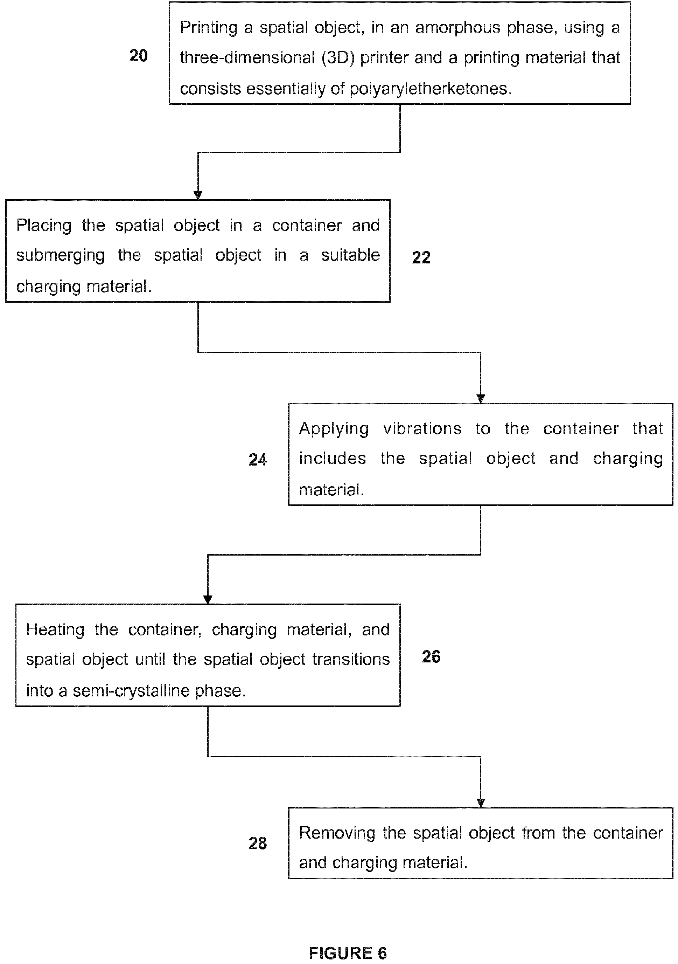

Fig. 6 provides a general summary of the method described herein. For example, the method generally begins by printing a spatial object **12**, in an amorphous phase, using a three-dimensional (3D) printer and a printing material that consists essentially of polyaryletherketones **20**. Next, the spatial object **12** is placed within a container **18** and submerged within a suitable charging material (as described above) **22**. Moderate vibrations are then applied to the container **18**, by tapping the container **18** or by other mechanical means **24**. Next, the container **18**, charging material **22**, and spatial object **12** are heated until the spatial object **12** transitions into a semi-crystalline phase **26** and until crystalline content of the spatial object is saturated in polyaryletherketones (at which point the spatial object **12** can be removed from the container **18** and charging material **22**, to complete the process **28**).

The invention provides that there are many advantages provided by the method of the present invention. For example, the method described herein preserves the geometrical form of the object **12** produced, even after the object **12** has been converted to the semi-crystalline phase including twisting and warping degradation. In addition, the methods enable 3D print operators to produce supports **14** that may be easily removed before phase transformation (from amorphous to semi-crystalline phase). Still further, the methods described herein are compatible with commercially-available 3D printers (and do not require the use of a specialized / expensive 3D printer).

## Claims

1. A method for producing spatial objects, which comprises:
(a) printing a spatial object (12) using a three-dimensional printer and a printing material that comprises polyaryletherketones, wherein the spatial object (12) is printed in an amorphous phase;
characterized it further comprises:
(b) placing the spatial object (12) in a container (18) and submerging the spatial object (12) in a charging material (16);
(c) heating the container (18) that includes the spatial object (12) and charging material (16) until the spatial object (12) transitions into a semi-crystalline phase.

2. The method according to claim 1, wherein the printing material comprises or consists essentially of polyetheretherketones or polyetherketoneketones.

3. The method according to claim 1 or 2, wherein the charging material (16) includes less than 50% impurities.

4. The method according to claim 1 or 2, wherein the charging material (16) includes less than 10% impurities and less than 10% water.

5. The method according to any of the preceding claims, wherein the charging material (16) consists essentially of sand, quartz granules, silica granules, silicon dioxide granules, aluminum dioxide granules, steel balls, or combinations of the foregoing.

6. The method according to any of the preceding claims, wherein the charging material (16) exhibits heat resistant properties that inhibit degradation of the charging material (16) between a glass transition temperature of the printing material and a melting temperature of the printing material.

7. The method according to any of the preceding claims, wherein the charging material (16) consists essentially of a granular material, which includes granules having a diameter or widest cross-section between 0.05 mm and 3 mm.

8. The method according to any of the preceding claims, which comprises applying vibrations to the container (18) that includes the spatial object (12) and the charging material (16).

9. The method according to any of the preceding claims, which further comprises printing one or more structural supports in the amorphous phase along with the spatial object (12), wherein the structural supports are configured to (a) physically support the spatial object (12) during printing and (b) be removed from the spatial object (12) after the spatial object (12) has been completely printed.

## Patentansprüche

1. Verfahren zur Herstellung von räumlichen Objekten, das Folgendes umfasst:
(a) Drucken eines räumlichen Objekts (12) unter Verwendung eines dreidimensionalen Druckers und eines Druckmaterials, das Polyaryletherketone umfasst, wobei das räumliche Objekt (12) in einer amorphen Phase gedruckt wird;
**dadurch gekennzeichnet, dass** es ferner umfasst:
(b) Platzieren des räumlichen Objekts (12) in einem Behälter (18) und Eintauchen des räumlichen Objekts (12) in ein Füllmaterial (16);
(c) Erhitzen des Behälters (18), der das räumliche Objekt (12) und das Füllmaterial (16) enthält, bis das räumliche Objekt (12) in eine halbkristalline Phase übergeht.

2. Verfahren nach Anspruch 1, wobei das Druckmaterial im Wesentlichen daraus Polyetheretherketone oder Polyetherketonketone umfasst oder besteht.

3. Verfahren nach Anspruch 1 oder 2, wobei das Füllmaterial (16) weniger als 50% Verunreinigungen enthält.

4. Verfahren nach Anspruch 1 oder 2, wobei das Füllmaterial (16) weniger als 10% Verunreinigungen und weniger als 10% Wasser enthält.

5. Verfahren nach einem der vorhergehenden Ansprüche, wobei das Füllmaterial (16) im Wesentlichen aus Sand, Quarzgranulat, Siliziumdioxidgranulat, Aluminiumdioxidgranulat, Stahlkugeln oder Kombinationen der vorgenannten Stoffe besteht.

6. Verfahren nach einem der vorhergehenden Ansprüche, wobei das Füllmaterial (16) hitzebeständige Eigenschaften aufweist, die eine Zersetzung des Füllmaterials (16) zwischen einer Glasübergangstemperatur des Druckmaterials und einer Schmelztemperatur des Druckmaterials verhindern.

7. Verfahren nach einem der vorhergehenden Ansprüche, wobei das Füllmaterial (16) im Wesentlichen aus einem körnigen Material besteht, das Körnchen mit einem Durchmesser oder weitesten Querschnitt zwischen 0,05 mm und 3 mm umfasst.

8. Verfahren nach einem der vorhergehenden Ansprüche, bei dem der Behälter (18), der das räumliche Objekt (12) und das Füllmaterial (16) enthält, mit Schwingungen beaufschlagt wird.

9. Verfahren nach einem der vorhergehenden Ansprüche, das ferner das Drucken eines oder mehrerer Strukturträger in der amorphen Phase zusammen mit dem räumlichen Objekt (12) umfasst, wobei die Strukturträger so konfiguriert sind, dass sie (a) das räumliche Objekt (12) während des Druckens physisch stützen und (b) von dem räumlichen Objekt (12) entfernt werden, nachdem das räumliche Objekt (12) vollständig gedruckt worden ist.

## Revendications

1. Procédé de production d'objets spatiaux, qui comprend:
(a) impression d'un objet spatial (12) à l'aide d'une imprimante tridimensionnelle et d'un matériau d'impression qui comprend des polyaryléthercétones, où l'objet spatial (12) est imprimé dans une phase amorphe ;
**caractérisé en ce qu'**il comprend en outre:
(b) mise en place d l'objet spatial (12) dans un récipient (18) et immersion de l'objet spatial (12) dans un matériau de charge (16);
(c) chauffage du récipient (18) qui comprend l'objet spatial (12) et le matériau de charge (16) jusqu'à ce que l'objet spatial (12) passe à une phase semi-cristalline.

2. Procédéselon la revendication 1, dans lequel le matériau d'impression comprend ou est constitué essentiellement de polyétheréthercétones ou de polyéthercétonecétones.

3. Procédéselon la revendication 1 ou 2, dans lequel le matériau de charge (16) comprend moins de 50% d'impuretés.

4. Procédéselon la revendication 1 ou 2, dans lequel le matériau de charge (16) comprend moins de 10% d'impuretés et moins de 10% d'eau.

5. Procédéselon l'une quelconque des revendications précédentes, dans lequel le matériau de charge (16) est constitué essentiellement de sable, granulés de quartz, granulés de silice, granulés de dioxyde de silicium, granulés de dioxyde d'aluminium, billes d'acier ou des combinaisons de ceux-ci.

6. Procédéselon l'une quelconque des revendications précédentes, dans lequel le matériau de charge (16) présente des propriétés de résistance à la chaleur qui inhibent la dégradation du matériau de charge (16) entre une température de transition vitreuse du matériau d'impression et une température de fusion du matériau d'impression.

7. Procédéselon l'une quelconque des revendications précédentes, dans lequel le matériau de charge (16) est constitué essentiellement d'un matériau granulaire qui comprend des granulés ayant un diamètre ou une section transversale la plus large entre 0,05 mm et 3 mm.

8. Procédéselon l'une quelconque des revendications précédentes, qui comprend l'application de vibrations au récipient (18) qui comprend l'objet spatial (12) et le matériau de charge (16).

9. Procédéselon l'une quelconque des revendications précédentes, qui comprend en outre l'impression d'un ou plusieurs supports structurels dans la phase amorphe avec l'objet spatial (12), où les supports structurels sont configurés pour (a) supporter physiquement l'objet spatial (12) pendant l'impression et (b) être retirés de l'objet spatial (12) après que l'objet spatial (12) a été complètement imprimé.
